(19) Europäisches Patentamt / European Patent Office / Office européen des brevets

(11) **EP 3 323 940 B1**

(12) **EUROPÄISCHE PATENTSCHRIFT**

(45) Veröffentlichungstag und Bekanntmachung des Hinweises auf die Patenterteilung:
**10.07.2019 Patentblatt 2019/28**

(51) Int Cl.:
*E01C 23/088* (2006.01)   *G05D 1/02* (2006.01)
*B62D 12/02* (2006.01)

(21) Anmeldenummer: **17201068.8**

(22) Anmeldetag: **10.11.2017**

(54) **SELBSTFAHRENDE FRÄSMASCHINE, SOWIE VERFAHREN ZUM STEUERN EINER SELBSTFAHRENDEN FRÄSMASCHINE**

SELF-PROPELLED MILLING MACHINE AND METHOD FOR CONTROLLING A SELF-PROPELLED MILLING MACHINE

FRAISEUSE AUTOMOTRICE ET PROCÉDÉ DE COMMANDE D'UNE FRAISEUSE AUTOMOTRICE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2016 DE 102016222589**

(43) Veröffentlichungstag der Anmeldung:
**23.05.2018 Patentblatt 2018/21**

(73) Patentinhaber: **Wirtgen GmbH**
**53578 Windhagen (DE)**

(72) Erfinder:
• **Berning, Christian**
**53909 Zülpich (DE)**
• **Vogt, Andreas**
**53567 Asbach (DE)**
• **Barimani, Cyrus**
**53639 Königswinter (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**EP-A1- 2 700 748      EP-A1- 2 806 066**

**Beschreibung**

Die Erfindung betrifft eine selbstfahrende Fräsmaschine nach dem Oberbegriff des Anspruchs 1, sowie ein Verfahren zum Steuern einer selbstfahrenden Fräsmaschine nach dem Oberbegriff des Anspruchs 12.

Die selbstfahrende Fräsmaschine, insbesondere Straßenfräse, Surface Miner, oder Recycler, weist einen Maschinenrahmen mit einer Längsachse, ein Fahrwerk mit Rädern oder Kettenlaufwerken, die den Maschinenrahmen tragen, sowie eine Steuerung für den Fahr- und Fräsbetrieb und eine höhenverstellbare Arbeitswalze auf. In Fahrtrichtung der Fräsmaschine vor oder hinter der Arbeitswalze ist ein schwenkbares letztes oder einziges Transportband vorgegebener Länge angeordnet, wobei das Transportband wenigstens um eine im Wesentlichen vertikal verlaufende erste Achse seitlich unter einem Schwenkwinkel automatisch verschwenkbar ist. Derartige Fräsmaschinen sind aus der EP 2 700 748 bekannt.

Die Fräsmaschine weist eine Steuerung für den Fahr- und Fräsbetrieb sowie eine Arbeitswalze zum Fräsen z.B. eines Straßenbelages auf. Vor oder hinter der Arbeitswalze - in Fahrtrichtung gesehen - befindet sich eine Transportbandeinrichtung mit mindestens einem Transportband. Je nachdem, wo das Transportband angeordnet ist, wird die Fräsmaschine im Folgenden als Vorder-/Hinterlader-Fräsmaschine bezeichnet. Das Transportband kann relativ zur Längsachse der Fräsmaschine seitlich unter einem vorgebbaren Schwenkwinkel nach links oder rechts verschwenkt werden und über einen vorgebbaren Höhenwinkel höhenverstellbar sein. Das Transportband weist ein Abwurfende auf, an dem das Fräsgut aufgrund der Fördergeschwindigkeit und des Höhenwinkels über eine Flugbahn in Form einer Wurfparabel auf die Ladefläche eines Transportfahrzeugs abgeladen wird.

Ein Problem besteht darin, dass die Bedienungsperson für die Fräsmaschine auch die Beladung der Ladefläche durch Verstellung des Schwenkwinkels, ggf. des Höhenwinkels und/oder der Fördergeschwindigkeit des Transportbandes kontrollieren muss und dadurch von der eigentlichen Aufgabe, den Fräsbetrieb durchzuführen, abgelenkt wird. Eine Korrektur des Schwenkwinkels kann beispielsweise bei einem Wechsel der Fahrtrichtung der Fräsmaschine oder des Transportfahrzeuges notwendig sein.

Auch im Falle einer Hinterlader-Fräsmaschine bestehen Probleme bei der Koordination der Fräsmaschine mit dem Transportfahrzeug, zumal das Transportfahrzeug hinter der Fräsmaschine in Rückwärtsfahrt hinterherfahren muss. Für die Bedienungsperson der Fräsmaschine ergibt sich eine noch höhere Belastung, da sie einerseits den Fräsbetrieb in Vorwärtsfahrt steuern muss und andererseits die Beladung des Transportfahrzeugs in Fahrtrichtung hinter der Fräsmaschine beobachten muss, und dabei hauptsächlich den Schwenkwinkel und ggf. den Höhenwinkel und/oder die Fördergeschwindigkeit der Transportbandeinrichtung steuern muss.

Das Transportband kann länger als die eigentliche Fräsmaschine sein und hat üblicherweise eine Länge von ca. 5 m bis ca. 8 m.

Aus der EP 2 700 748 ist eine automatische Steuerung des Schwenkwinkels vorgesehen, die es ermöglicht, dass sich die Bedienungsperson der Fräsmaschine auf den Fräsbetrieb und die Fahrt entlang einer vorgegebenen Frässpur konzentrieren kann. Die Fräsmaschine kann auf diese Weise in Fahrtrichtung wie ein Fahrzeug mit einem gezogenen einachsigen Anhänger bewegt werden.

Ausgehend von einem derartigen Stand der Technik liegt der Erfindung die Aufgabe zugrunde, eine selbstfahrende Fräsmaschine sowie ein Verfahren zum Steuern der Fräsmaschine zu schaffen, bei der in jeder Betriebssituation eine vereinfachte Durchführung des Beladeprozesses realisiert werden kann.

Zur Lösung dieser Aufgabe dienen die Merkmale der selbständigen Ansprüche.

Die Erfindung sieht in vorteilhafter Weise vor, dass ein Steuerungssystem zumindest in Abhängigkeit einer in einem von Position und Ausrichtung des Maschinenrahmens unabhängigen ortsfesten Koordinatensystem frei vorgebbaren, virtuellen Trajektorie für die Positionierung des Transportbandes zumindest den Schwenkwinkel des Transportbandes derart automatisch steuert oder regelt, dass ein Bezugspunkt des Transportbandes, vorzugsweise das Abwurfende des Transportbandes oder die Auftreffstelle des abgearbeiteten Fräsgutes, bei einer Positionsveränderung des Maschinenrahmens innerhalb des Koordinatensystems stets auf der vorgegebenen Trajektorie verbleibt.

In vorteilhafter Weise wird der Bezugspunkt, z. B. das Abwurfende des Transportbandes oder die Auftreffstelle des abgearbeiteten Fräsgutes, entlang einer Trajektorie geführt, die frei vorgebbar ist und virtuell innerhalb eines relativ zur Bodenoberfläche ortsfesten Koordinatensystem festgelegt ist. Der Bezugspunkt des Transportbandes ist dabei ein virtueller oder realer Ort auf dem Transportband oder in dessen Verlängerung, der die Position des Transportbandes repräsentiert.

Bei bekannter Position und Ausrichtung der Fräsmaschine innerhalb des Koordinatensystems und bei bekanntem Verlauf der Trajektorie im Koordinatensystem kann das Steuerungssystem den aktuell einzustellenden Schwenkwinkel des Transportbandes relativ zur Fräsmaschine durch Berechnung so bestimmen, dass z.B. das Abwurfende des Transportbandes bzw. die Auftreffstelle des abgearbeiteten Fräsgutes stets auf der vorgegebenen Trajektorie verbleibt.

Zur Initialisierung der automatischen Steuerung oder Regelung kann das Koordinatensystem relativ zum Maschinenrahmen festgelegt werden, beispielsweise durch Festlegen der Ausgangsposition der Maschine als Ursprung des Koordinatensystems. Dabei kann z.B. die Schwenkachse des Transportbandes relativ zum Maschinenrahmen den Referenzpunkt der Fräsmaschine für die Ausgangsposition bilden. Die Y-Ausrichtung des Koordinatensystems kann dann beispielsweise parallel zur Längsachse des Maschinenrahmens verlaufen. Bei der Initialisierung sollte die in dem Koordinatensystem festgelegte Trajektorie vorzugsweise durch die momentane Position des Bezugspunktes, z.B. des Abwurfendes bzw. der Auftreffstelle, verlaufen.

Das Koordinatensystem bzw. die Trajektorie ist nur bei der Initialisierung relativ zur Fräsmaschine ausgerichtet und ist nach der Initialisierung ortsfest und somit unabhängig von der Maschinenposition. Die Maschine bewegt sich also nach der Initialisierung in diesem festgelegten Koordinatensystem.

Im Falle einer Regelung kann die Trajektorie als Führungsgröße angesehen werden, die Positionsänderung der Fräsmaschine als Störgröße und der Schwenkwinkel als Regelgröße.

Im Ergebnis kann das Steuerungssystem den Abstand zwischen dem Bezugspunkt des Transportbandes und der Trajektorie über die Schwenkwinkelsteuerung minimieren.

Vorzugsweise ist vorgesehen, dass das Steuerungssystem die aktuelle Position und Ausrichtung des Maschinenrahmens in dem Koordinatensystem fortlaufend erfasst und in Abhängigkeit der Lage der ortsfesten Trajektorie relativ zu dem Maschinenrahmen oder zum Bezugspunkt des Transportbandes den einzustellenden Schwenkwinkel bestimmt.

Fortlaufend ist auch eine Positionsbestimmung in bestimmten Zeitintervallen, z.B. mit einer Frequenz von 1 Hz.

Bei einem besonders bevorzugten Ausführungsbeispiel ist vorgesehen, dass in dem Steuerungssystem die Lage der Trajektorie relativ zu dem ortsfesten Koordinatensystem veränderbar ist und dass das Steuerungssystem den einzustellenden Schwenkwinkel bei veränderter Lage der Trajektorie im Koordinatensystem neu berechnet.

Dies hat den Vorteil, dass die Bedienungsperson nicht nur zu Beginn eines Fräsprozesses die Lage einer Trajektorie festlegen kann, sondern auch während des Betriebs verändern kann, ohne dabei gleichzeitig die automatische Einstellung des Schwenkwinkels aufgeben zu müssen.

Hierzu kann das Steuerungssystem ein von der Bedienungsperson bedienbares Kontrollbedienelement bzw. eine Eingabeeinrichtung aufweisen, mit denen bei einer gewünschten Veränderung der Lage der aktuellen Trajektorie eine andersartige Trajektorie in dem Koordinatensystem festlegbar ist oder mit dem die Ausrichtung der vorliegenden Trajektorie in dem Koordinatensystem um eine voreingestellte, im Wesentlichen orthogonal zur Bodenoberfläche verlaufende virtuelle Drehachse schwenkbar ist.

Demzufolge kann die Bedienungsperson zum einen eine grundsätzlich geänderte Trajektorie in das Steuerungssystem eingeben oder die Ausrichtung einer bereits im Koordinatensystem voreingestellten Trajektorie verändern.

Ein geänderter Verlauf der Trajektorie kann beispielsweise auch darin bestehen, dass die vorhandene Trajektorie parallel verschoben wird, z.B. wenn das Transportmittel nicht in Verlängerung der Frässpur fährt, sondern parallel zur Frässpur.

Bei einer Drehung der voreingestellten Trajektorie um eine virtuelle Drehachse kann die Drehachse in Verlängerung zu dem Transportband in einem Bereich zwischen dem Abwurfende des Transportbandes und der berechneten Auftreffstelle einstellbar sein, wobei die vertikale Drehachse vorzugsweise durch das Abwurfende oder die berechenbare Auftreffstelle verläuft.

Bei einem vorteilhaften Ausführungsbeispiel ist vorgesehen, dass das Steuerungssystem eine Bildanzeigeeinrichtung aufweist, die zumindest die relative Lage der aktuell gewählten Trajektorie in Relation zu dem Transportband und/oder zu der Längsachse des Maschinenrahmens und/oder zu der Lage der Ladefläche des Transportmittels grafisch darstellt.

Die visuelle Darstellung der Trajektorie ermöglicht es der Bedienungsperson, die automatische Schwenkwinkelsteuerung zu überwachen und ggf. Richtung und Verlauf der Trajektorie mit Hilfe des Kontrollbedienelementes zu verändern.

Das Steuerungssystem kann zur Berechnung der aktuellen Position und Ausrichtung des Maschinenrahmens im Koordinatensystem den Lenkeinschlag und die zurückgelegte Fahrstrecke oder den Lenkeinschlag und die momentane Fahrgeschwindigkeit fortlaufend erfassen oder mit Hilfe von GPS-Sensoren Position und Ausrichtung des Maschinenrahmens relativ zu dem Koordinatensystem fortlaufend erfassen.

Außerdem können auch verschiedene Lenkmodi bei der Berechnung berücksichtigt werden, wie z. B. koordiniertes Lenken aller Räder oder Kettenlaufwerke durch gleiches oder gegenläufiges Lenken beider Achsen oder Lenken nur einer Achse.

Das Steuerungssystem kann z.B. den orthogonalen Abstand a eines Referenzpunktes auf dem Maschinenrahmen, vorzugsweise auf der Längsachse, zu der Trajektorie und den Winkel zwischen der Längsachse des Maschinenrahmens und der Trajektorie bestimmen.

Das Transportband kann um eine orthogonal zur ersten Schwenkachse verlaufende zweite Achse unter einem vorgegebenen Höhenwinkel neigbar sein, wobei das Steuerungssystem den Schwenkwinkel des schwenkbaren Transportbandes zusätzlich in Abhängigkeit mindestens eines der nachfolgenden Parameter, nämlich der Längs- und Querneigung des Maschinenrahmens, der Vorschubgeschwindigkeit, dem Höhenwinkel des Transportbandes und der Fördergeschwindigkeit des Fräsgutes derart fortlaufend automatisch steuert, dass das schwenkbare Transportband in jeder Lenksituation bei Vorwärtsfahrt oder Rückwärtsfahrt einen vorgegebenen Schwenkwinkel annimmt, bei dem der Bezugspunkt des Transportbandes im Wesentlichen entlang der Trajektorie geführt ist.

Das Transportband kann auch um eine orthogonal zur ersten Schwenkachse verlaufende zweite Achse unter einem vorgegebenen Höhenwinkel neigbar sein, wobei das Transportband das Fräsgut mit einer vorgegebenen Fördergeschwindigkeit auf die Ladefläche des Transportmittels abwirft. Das Steuerungssystem kann außer dem Schwenkwinkel des schwenkbaren Transportbandes den Höhenwinkel und/oder die Fördergeschwindigkeit des Transportbandes derart automatisch steuern oder regeln, dass der Bezugspunkt des Transportbandes bei einer Positionsveränderung des Maschinenrahmens innerhalb des Koordinatensystems stets auf der vorgegebenen Trajektorie verbleibt.

Zusätzlich kann vorgesehen sein, dass das Steuerungssystem die Lage der Ladefläche im Koordinatensystem fortlaufend ortet, um den Bezugspunkt des Transportbandes, z.B. das Abwurfendeoder die Auftreffstelle entlang der vorgegebenen Trajektorie stets innerhalb der Ladefläche zu halten.

Das Steuerungssystem kann mindestens einen Detektor aufweisen, der direkt oder indirekt bei bekanntem Lenkmodus den vorgegebenen Lenkeinschlag der Lenksteuerung und die zurückgelegte Fahrstrecke oder den Lenkeinschlag und die Fahrgeschwindigkeit detektiert.

Das Steuerungssystem kann Signale einer Abstandsmesseinrichtung erhalten, mit der der Abstand zu einem Transportmittel detektierbar ist.

Bei einem bevorzugten Ausführungsbeispiel ist vorgesehen, dass das Steuerungssystem eine Bildaufnahmeeinrichtung aufweist, die eine reale oder virtuelle Sicht aus der Perspektive der Bedienungsperson oder aus der Vogelperspektive, vorzugsweise über der virtuellen Drehachse der Trajektorie, erzeugt, wobei das Steuerungssystem die virtuelle Trajektorie in das von der Bildaufnahmeeinrichtung erzeugte und auf der Bildanzeigeeinrichtung angezeigte Bild einblendet.

Die Trajektorie ist vorzugsweise eine Gerade oder eine Kurve mit vorgegebenem Kurvenradius. Schließlich kann die Trajektorie auch ein beispielsweise dem Straßenverlauf folgender Kurvenverlauf sein, der in Abhängigkeit einer Wegstrecke oder im Rahmen eines gewählten Koordinatensystems definierbar ist.

Die Gerade oder Kurve kann beispielsweise durch eine mathematische Funktion in ein relatives oder absolutes Koordinatensystem eingegeben werden, ein Kurvenverlauf beispielsweise durch ein Positionsdatenfeld in Form von auf das Koordinatensystem bezogenen Koordinatendaten.

Die Erfindung betrifft desweiteren ein Verfahren zum Steuern einer selbstfahrenden Fräsmaschine.

Weitere vorteilhafte Merkmale sind der Beschreibung zu entnehmen.

Im Folgenden werden unter Bezugnahme auf die Zeichnungen Ausführungsbeispiele der Erfindung näher erläutert.

Es zeigen:

Fig. 1      eine Hinterlader-Straßenfräsmaschine,
Fig. 2      eine Frontlader-Straßenfräsmaschine, und
Fig. 3      eine schematische Darstellung einer Ausgangsposition der Fräsmaschine in dem Koordinatensystem, sowie die automatische Schwenkwinkelsteuerung bei einer Positionsveränderung der Fräsmaschine,
Fig. 4      eine schematische Darstellung gemäß Fig. 3 mit unterschiedlicher Lage der Trajektorie,
Fig. 5a     die Schwenkbarkeit der Trajektorie um eine virtuelle Schwenkachse,
Fig. 5b     die Parallelverschiebung einer Trajektorie,
Fig. 5c     eine kurvenförmige Trajektorie,
Fig. 6      ein Beispiel für die Berechnung des einzustellend Schwenkwinkels, und
Fig. 7      ein Prinzipschaltbild der Steuerungs- und Erfassungseinrichtung.

Die nachfolgende Beschreibung bezieht sich auf selbstfahrende Fräsmaschinen, und zwar insbesondere auf Straßenfräsmaschinen, aber auch auf Surface Miner und Recycler.

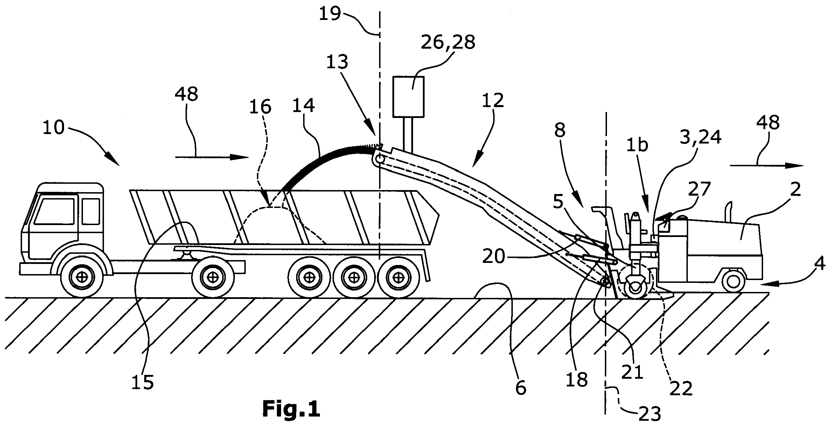

Fig. 1 zeigt das Beispiel einer Hinterlader-Fräsmaschine 1b, bei der das Transportfahrzeug 10 in Rückwärtsfahrt hinter der Fräsmaschine hinterherfährt.

Sofern seitlich neben der Fräsmaschine 1b ausreichend Platz zur Verfügung steht, kann das Transportmittel 10, z.B. ein LKW, auch in Vorwärtsfahrt neben der Fräsmaschine 1b bewegt werden.

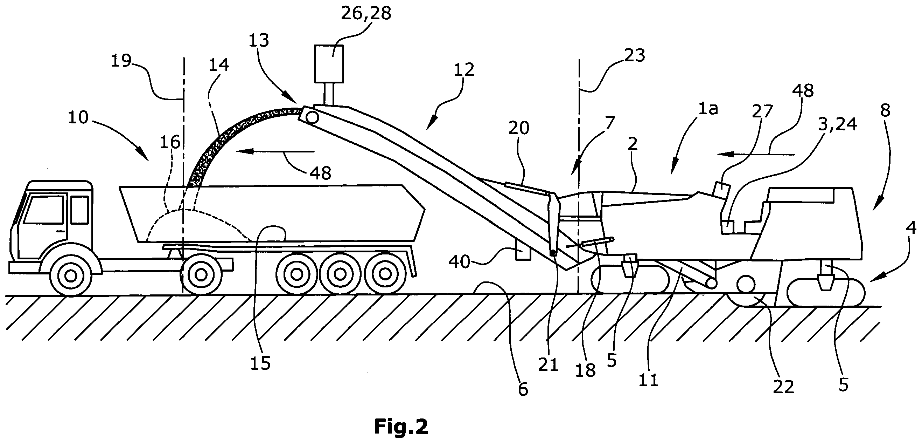

Fig. 2 zeigt eine Fräsmaschine am Beispiel einer Frontlader-Straßenfräsmaschine 1a. Die Fräsmaschine 1a, 1b weist einen Maschinenrahmen 2 auf, der von einem beispielsweise aus Kettenlaufwerken oder Rädern bestehenden Fahrwerk 4 getragen wird, das über mindestens zwei Höhenverstelleinrichtungen in Form von Hubsäulen 5 mit dem Maschinenrahmen 2 verbunden ist. Wie aus Fig. 2 ersichtlich, sind bei dem Ausführungsbeispiel vier Hubsäulen 5 vorgesehen, mit denen der Maschinenrahmen 2 in eine vorgebbare Ebene gebracht werden kann, die vorzugsweise parallel zur Straßenoberfläche 6 verläuft, auf denen die Kettenlaufwerke des Fahrwerks 4 stehen.

Die in Fig. 2 gezeigte Fräsmaschine 1a weist in Längsrichtung der Fräsmaschine 1a zwischen den Kettenlaufwerken des Fahrwerks 4 eine Arbeitswalze 22 auf.

Die Arbeitswalze 22 kann über die den Maschinenrahmen 2 tragenden Hubsäulen 5 oder relativ zu dem Maschinenrahmen 2 höhenverstellbar sein.

Die Fräsmaschinen 1a, 1b können lenkbare Kettenlaufwerke und/oder Räder aufweisen.

Andere Bauformen einer Fräsmaschine 1b können die Arbeitswalze 22 beispielsweise auch in Höhe der hinteren Kettenlaufwerke oder Räder des Fahrwerks 4 aufweisen, wie in der Fig. 1 auch dargestellt.

Ebenso kann ein Transportband 12 zum Abtransport des abgefrästen Fräsgutes am vorderen 7 oder hinteren Ende 8 der Fräsmaschine 1a, 1b angeordnet sein.

Die Fahrtrichtungen der jeweiligen Fahrzeuge sind in den Fign. 1 und 2 jeweils durch Pfeile 48 angezeigt.

Bei dem Ausführungsbeispiel der Fig. 2 wird das von der Arbeitswalze 22 abgefräste Fräsgut 14 über ein erstes Transportband 11 auf ein zweites, schwenkbares Transportband 12 übertragen, das das Fräsgut 14 auf die Ladefläche 15 des Transportmittels 10 ablädt. Abhängig von der Fördergeschwindigkeit des Transportbandes 12 wird das Fräsgut 14 nicht unmittelbar am Abwurfende 13 des Transportbandes 12 abgeladen, vielmehr folgt das Fräsgut 14 einer Wurfparabel, so dass die Auftreffstelle 16 auf der Ladefläche 15 mit Abstand von dem freien Abwurfende 13 des Transportbandes 12 in dessen Verlängerung befindlich ist. Das Transportband 12 kann aus einer Mittelposition heraus nach links oder nach rechts über Kolben-Zylindereinheiten 18 um einen Schwenkwinkel $\alpha$ verschwenkt werden, um das Fräsgut 14 auch bei Kurvenfahrt bzw. bei spurversetztem Fahren des Transportfahrzeugs 10 auf die Ladefläche 15 abladen zu können. Des Weiteren kann die Bedienungsperson der Fräsmaschine 1a, 1b den Höhenwinkel des Transportbandes 12 mit Hilfe einer Kolben-Zylindereinheit 20 einstellen. Der Höhenwinkel beeinflusst ebenso wie die Fördergeschwindigkeit des Transportbandes 12 die Wurfparabel des Fräsgutes 14 und die Position der Auftreffstelle 16.

Die Auftreffstelle 16 bezeichnet dabei die Stelle, an der das vom Transportband 12 abgeworfene Fräsgut 14 auf die Ladefläche 15 des Transportmittels 10 trifft. Diese hängt neben dem Schwenkwinkel des Transportbandes 12 auch von der Neigung und der Fördergeschwindigkeit des Transportbandes 12, sowie in geringerem Maße von der Höhe der Ladefläche 15 und deren Füllzustand ab. Die Auftreffstelle 16 lässt sich somit bei bekanntem Schwenkwinkel $\alpha$ des Transportbandes 12 hinreichend genau berechnen. Für eine genauere Berechnung können weiterhin die Parameter Höhenwinkel und/oder Fördergeschwindigkeit und/oder Eigenschaften des Transportmittels 10 mit berücksichtigt werden.

Der aktuell eingestellte Höhenwinkel um eine horizontale Achse 21 bzw. der Schwenkwinkel $\alpha$ um eine vertikale Schwenkachse 23, sowie der aktuelle Lenkwinkel wird an ein Steuerungssystem 24 gemeldet, das des Weiteren mindestens einen Detektor 26 aufweisen kann, der die Lage der Ladefläche 15 fortlaufend detektiert. Dieser Detektor 26 kann entweder an der Fräsmaschine 1a, 1b an dem dem Transportband 12 zugewandten Ende oder an dem freien Abwurfende 13 des Transportbandes 12 angeordnet sein.

Desweiteren können weitere grundsätzlich aus dem Stand der Technik bekannte Detektoren vorhanden sein, die direkt oder indirekt den aktuellen Schwenkwinkel und den Höhenwinkel des Transportbandes 12 detektieren. Eine direkte Detektion kann an der Schwenkachse 23 erfolgen, eine indirekte Detektion kann beispielsweise erfolgen, wenn die Schwenk-/Höhenwinkel mit Kolben-Zylindereinheiten 18, 20 eingestellt werden und ein Wegmesssystem die Stellung der Kolben-Zylindereinheiten 18, 20 überwacht. Diese Stellung kann dann einem bestimmten Schwenk-/Höhenwinkel zugeordnet werden.

Das Steuerungssystem 24 kann in die von der Bedienungsperson betätigte Steuerung 3 für den Fahr- und Fräsbetrieb integriert sein oder mit dieser zumindest verbunden sein, um ggf. auch Daten über die Fahrgeschwindigkeit, die zurückgelegte Fahrstrecke und/oder einen detektierten Lenkwinkel der Fräsmaschine 1a, 1b und die Fördergeschwindigkeit des Transportbandes 12 zu erhalten.

Das Steuerungssystem 24 verwendet ein von der Position und Ausrichtung des Maschinenrahmens 2 unabhängiges, ortsfestes Koordinatensystem, das bei einem Start des Fräsprozesses initialisiert und im Steuerungssystem 24 in einem Speicher 58 gespeichert wird. In Abhängigkeit der aktuellen Position der Fräsmaschine 1a, 1b und einer in dem Koordinatensystem vorgegebenen Trajektorie 25 steuert das Steuerungssystem 24 den Schwenkwinkel $\alpha$ des Transportbandes 12 automatisch. Das Koordinatensystem ist gegenüber der Bodenoberfläche 6 ortsfest, kann aber bei der Initialisierung durch die Ausgangsposition der Fräsmaschine in dem Steuerungssystem 24 z.B. dadurch festgelegt werden, dass es in Relation zu der aktuellen Maschinenposition bei der Initialisierung festgelegt wird. Beispielsweise kann die Position des Maschinenrahmens 2 bzw. eines Teils der Maschine, z.B. die Position der Schwenkachse 23, in den Ursprung des Koordinatensystems gesetzt sein. Auch kann wie in den Zeichnungen dargestellt, der Ursprung versetzt zu der Position der Schwenkachse 23 oder an beliebiger anderer Stelle, deren Abstand von der Schwenkachse 23 bekannt ist, gesetzt sein. Die Ausrichtung des Maschinenrahmens 2, d.h. die Längsachse 9 kann parallel zur Y-Achse des Koordinatensystems gesetzt werden.

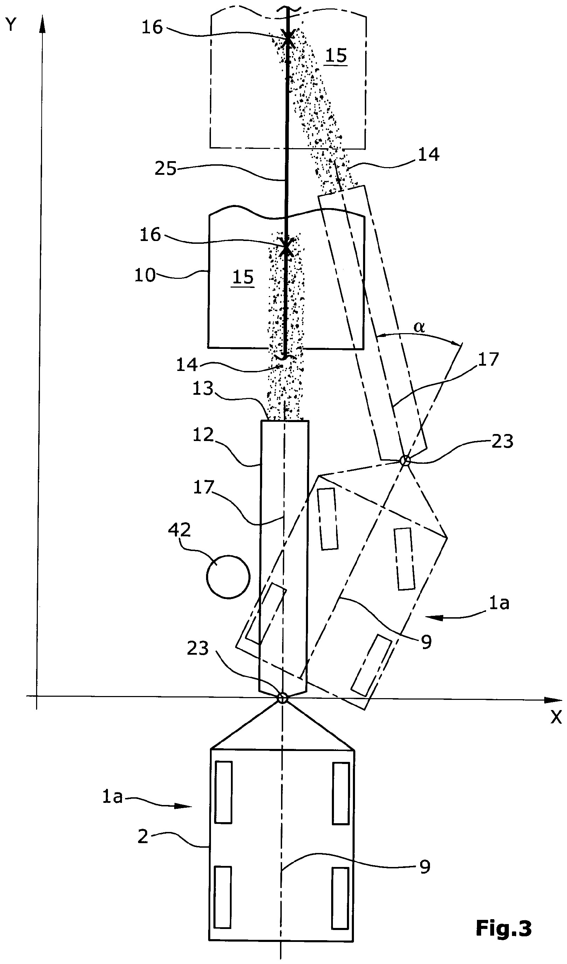

Eine frei vorgebbare virtuelle Trajektorie 25, beispielsweise in Form einer Geraden, wie aus den Ausführungsbeispielen der Fign. 3 bis 5a ersichtlich, kann in das Steuerungssystem 24 eingegeben werden und in das ortsfeste Koordinatensystem integriert und gespeichert werden. In den Figuren zeigt die durchgezogen gezeichnete Darstellung eine Ausgangsposition, wohingegen die gestrichelte Darstellung die Situation nach einer Positionsänderung des Maschinenrahmens 2 bzw. der Ladefläche 15 zeigt. Mit Hilfe der aktuellen Maschinenposition im Koordinatensystem und der fest vorgegebenen Trajektorie 25 im Koordinatensystem kann das Steuerungssystem 24 den Schwenkwinkel $\alpha$ des Transportbandes 12 um die vertikale Schwenkachse 23 derart automatisch steuern oder regeln, dass ein Bezugspunkt des Transportbandes 12 bei einer Positionsveränderung des Maschinenrahmens 2 stets auf der vorgegebenen Trajektorie gehalten wird. Zweckmäßigerweise ist ein solcher Bezugspunkt z.B. das Abwurfende 13 des Transportbandes 12.

Fig. 3 zeigt ein einfaches Ausführungsbeispiel, bei dem die Längsachse 9 des Maschinenrahmens 2 der Fräsmaschine 1a und die Längsmittelachse 17 des Transportbandes 12 in der Ausgangsposition geradlinig zueinander ausgerichtet sind, d.h. der aktuelle Schwenkwinkel $\alpha$ des Transportbandes 12 beträgt relativ zum Maschinenrahmen 2 Null.

In Verlängerung des Transportbandes 12 über das Abwurfende 13 hinaus ist die Auftreffstelle 16 auf der Ladefläche 15 des Transportmittels 10 gezeigt, das in der Ausgangsposition ebenfalls kollinear zu der Längsmittelachse 17 und der Längsachse 9 ausgerichtet ist.

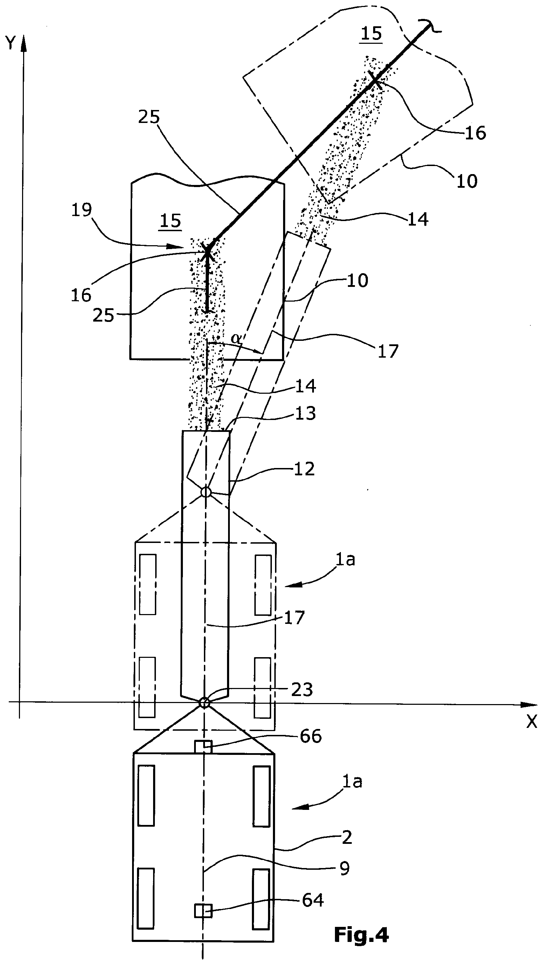

In den Fign. 3 und 4 ist das Koordinatensystem mit seiner Y-Achse parallel zur Längsachse 9 des Maschinenrahmens 2 ausgerichtet, wobei der Ursprung zur besseren Veranschaulichung versetzt zu der Schwenkachse 23 dargestellt ist, so dass die Ausgangsposition der Maschine in Fig. 3 die Koordinaten (x, 0) aufweist. Bevorzugt ist allerdings das automatische Festlegen des Ursprungs des Koordinatensystems in Bezug auf einen festen Referenzpunkt des Maschinenrahmens, z.B. die Schwenkachse 23, bei paralleler Ausrichtung der Y-Achse zu der Längsachse 9 des Maschinenrahmens 2. Alternativ kann beispielsweise die Y-Achse parallel zur Längsachse 17 des Transportbandes 12 ausgerichtet sein.

Ausgehend von einer derartigen Situation, in der der Maschinenrahmen 2 das Transportband 12, das Transportmittel 10 und die vorgegebene Trajektorie 25 kollinear sind, ist die Situation in Fig. 3 gestrichelt dargestellt, in der die Fräsmaschine 1a einen Kanaldeckel 42 umfahren muss. Dabei ergibt sich eine Änderung der Position und Ausrichtung des Maschinenrahmens 2 in dem festgelegten Koordinatensystem. Durch die kontinuierliche Erfassung dieser Positions- und Ausrichtungsänderungen kann das Steuerungssystem 24 die notwendige Veränderung des Schwenkwinkels $\alpha$ für das Transportband 12 automatisch ermitteln und regeln. Aus der gestrichelten Darstellung ist ersichtlich, dass trotz Veränderung der Position der Fräsmaschine 1a, durch diese Steuerung die Auftreffstelle 16 des Fräsgutes stets auf der Trajektorie 25 verbleibt.

Es versteht sich, dass anstelle der Auftreffstelle 16 auch ein anderer, von der Schwenkbewegung des Transportbandes 12 abhängiger Bezugspunkt zu dem Transportband 12 gewählt werden kann, wie beispielsweise das Abwurfende 13, oder ein anderer Bezugspunkt auf dem Transportband 12 oder in dessen Verlängerung.

Die Fig. 4 zeigt eine Ausgangsposition, bei der die Fräsmaschine 1a, das Transportband 12, und das Transportmittel 10 zunächst kollinear ausgerichtet sind, dagegen die vorgegebene Trajektorie 25 so geändert worden ist, dass sie ausgehend von der dargestellten Ausgangsposition schräg zur Längsachse 9 des Maschinenrahmens 2 und der Längsmittelachse 17 des Transportbandes 12 verläuft. Ein solcher Eingriff kann beispielsweise erfolgen, wenn die Bedienperson der Fräsmaschine erkennt, dass das Transportmittel 10 eine Lenkbewegung durchführt und sich daher nicht mehr kollinear zur Längsachse 9 des Maschinenrahmens 2 bzw. des Transportbandes 12 bewegt. Ein solcher Fall kann beispielsweise eintreten, wenn das Transportmittel 10 vor der Fräsmaschine 1a,1b in eine Kurve einfährt.

Nachdem sowohl das Transportmittel 10 als auch die Fräsmaschine 1a ihre Positionen geändert haben, ist ersichtlich, dass auch in diesem Fall automatisch der Schwenkwinkel $\alpha$ ohne Zutun der Bedienungsperson geregelt werden kann, indem in diesem Fall die Auftreffstelle 16 bei der Vorwärtsfahrt der Fräsmaschine 1a der geänderten Trajektorie 25 automatisch folgt.

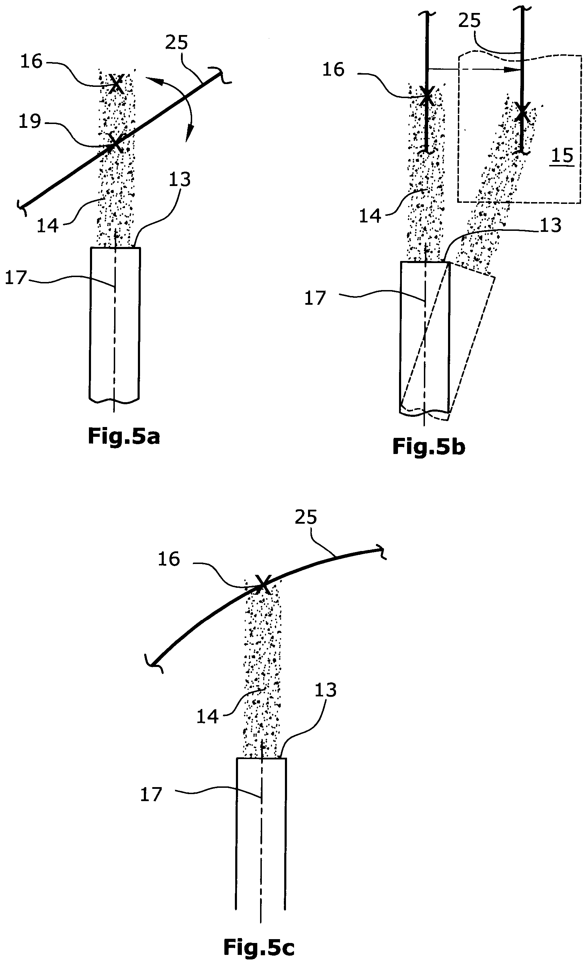

Fign. 5a, 5b, 5c zeigen weitere Ausführungsbeispiele, bei denen die Bedienperson die Lage der Trajektorie 25 innerhalb des Koordinatensystems variieren kann.

Hierzu ist ein Bedienelement 27 vorgesehen, das mit dem Steuerungssystem 24 verbunden ist. Bei einer gewünschten Veränderung der Lage der aktuellen Trajektorie 25 ist über das Bedienelement 27 ein geänderter Verlauf der Trajektorie 25 in dem Koordinatensystem festlegbar, indem beispielsweise die Trajektorie 25 im Koordinatensystem gedreht (Fig. 5a) oder parallel verschoben wird (Fig. 5b). Beispielsweise kann das Bedienelement 27 einen Drehschalter aufweisen, der zum Drehen der Trajektorie in zwei Richtungen drehbar ist und zur Parallelverschiebung seitlich nach links oder rechts verschiebbar ist. Desweiteren kann das Bedienelement 27 eine Eingabeeinrichtung aufweisen. Alternativ kann eine Dateneingabe über eine nicht dargestellte Eingabeeinrichtung der Steuerung 3 erfolgen.

Falls eine andersartige, z.B. eine gekrümmte Trajektorie 25 (Fig. 5c) oder ein Kurvenverlauf eingegeben werden soll, kann die Dateneingabe ebenfalls über das Bedienelement 27 erfolgen.

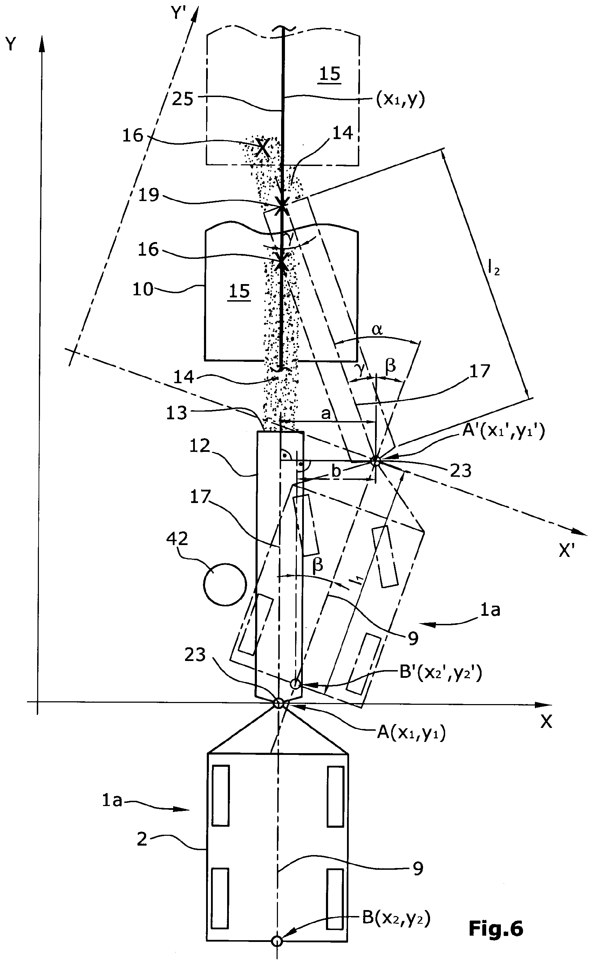

In Fig. 5a wird die aktuelle Trajektorie 25 um eine voreingestellte, im Wesentlichen orthogonal zur Bodenoberfläche 6 verlaufende virtuelle Drehachse 19 verschwenkt. Die vertikale Drehachse 19 kann in Verlängerung zu dem Transportband 12 vorzugsweise in einem Bereich zwischen dem Abwurfende 13 und der berechneten Auftreffstelle 16 einstellbar sein, wobei allerdings die virtuelle Drehachse 19 vorzugsweise durch das Abwurfende 13 (Fign. 1 und 6) oder durch die Auftreffstelle 16 (Fign. 2 und 4) verlaufen soll. Weiterhin kann vorgesehen sein, dass die Lage der virtuellen Drehachse 19 über das Bedienelement 27 durch den Maschinenbediener geändert werden kann.

Die in Fig. 5b dargestellte Parallelverschiebung der Trajektorie 25 kann bspw. zu Beginn der Fräsarbeiten notwendig sein, wenn das System für eine Verladung auf ein parallel zur Frässpur fahrendes Transportmittel 10 vorbereitet wird.

Bei der Initialisierung liegt die Trajektorie 25 kollinear zur Längsachse 9 des Maschinenrahmens 2 und wird dann vor Beginn des Fräsprozess in dem Koordinatensystem derart parallel verschoben, dass sie kollinear zur Längsmittelachse des Transportmittels 10 liegt.

Eine Bildanzeigeeinrichtung 30 kann zumindest die relative Lage der aktuell gewählten Trajektorie 25 in Relation zu dem Transportband 12 und/oder zur Längsachse 9 des Maschinenrahmens 2 und/oder zu der Lage der Ladefläche 15 des Transportmittels 10 graphisch darstellen, sofern die Ortung der Lage der Ladefläche 15 vorgesehen ist.

Zusätzlich kann eine Bildaufnahmeeinrichtung 28 vorgesehen sein, die eine reale oder virtuelle Sicht aus der Perspektive der Bedienungsperson oder aus der Vogelperspektive in Form eines Bildes erzeugt. Die Vogelperspektive wird vorzugsweise über der virtuellen Drehachse 19 der Trajektorie 25 erzeugt. Das Steuerungssystem 24 kann die virtuelle Trajektorie 25 in das von der Bildaufnahmeeinrichtung 28 erzeugte, und auf der Bildanzeigeeinrichtung 30 angezeigte Bild einblenden.

Die mit durchgezogenen Linien in Fig. 6 schematisch dargestellte Fräsmaschine 1a zeigt die Ausgangsposition, in der ein Koordinatensystem X, Y relativ zur Fräsmaschine definiert ist. Die vorgegebene Trajektorie 25 befindet sich in diesem Ausführungsbeispiel auf einer Achse mit der Längsachse 9 des Maschinenrahmens 2 in der Ausgangsposition. Wenn sich die Fräsmaschine 1a Straßenfräse in Bewegung setzt, werden über Sensoren 50 bis 52 kontinuierlich die von der Fräsmaschine zurückgelegte Strecke und der dabei eingestellte Lenkwinkel erfasst.

Aus diesen Daten lassen sich die von einem Referenzpunkt, z. B. die Schwenkachse 23, auf dem Maschinenrahmen 2 zurückgelegte Strecke und die geänderte Ausrichtung des Maschinenrahmens 2 relativ zur Y-Achse des Koordinatensystems (Winkel $\beta$) bestimmen. Position und Ausrichtung des Maschinenrahmens 2 der Fräsmaschine in dem bei der Initialisierung definierten Koordinatensystem X, Y lassen sich somit eindeutig bestimmen. Zusammen mit der ebenfalls eindeutig im Koordinatensystem festgelegten Position und Ausrichtung der Trajektorie 25 lässt sich somit der Schwenkwinkel $\alpha$ so bestimmen, dass sich der Bezugspunkt, in Fig. 6 das Ende 13 des Transportbandes 12, auf der Trajektorie 25 befindet. Hierbei kann vorgesehen sein, dass das Steuerungssystem 24 kontinuierlich die geänderten Positionsdaten im Koordinatensystem X, Y der Fräsmaschine 1a im Verhältnis zu der Ausgangsposition ermittelt.

Alternativ kann dieser Prozess iterativ durchgeführt werden, d. h. an einer "neuen" Position der Fräsmaschine (gestrichelte Darstellung) kann nach der Steuerung zur Einstellung des aktuellen Schwenkwinkels ein neues Koordinatensystem (X', Y') definiert werden, indem die aktuelle Position als Ausgangsposition übernommen wird. Die Lage der Trajektorie wird dann relativ zu diesem neuen Koordinatensystem X', Y' umgerechnet und gespeichert und bei einer weiteren Positionsänderung der Fräsmaschine die Relativbewegung der Fräsmaschine in dem neuen Koordinatensystem X', Y' ermittelt.

In Fig. 6 ist ein Beispiel dargestellt, wie der Schwenkwinkel $\alpha$ in dem Koordinatensystem Y, X berechnet werden kann. Hierzu sind an dem Maschinenrahmen 2 Bezugspunkte A, B festgelegt, die in dem Koordinatensystem X, Y die Koordinaten A =$(x_1, y_1)$ und B $(x_2, y_2)$ haben. Der Bezugspunkt A kann beispielsweise die Schwenkachse 23 sein. In Fig. 6 hätte der Bezugspunkt A die Koordinaten $x_1$,0 es versteht sich aber, dass der Bezugspunkt A auch die Koordinaten (0,0) bezogen auf das Koordinatensystem X, Y haben kann. Die Trajektorie 25 ist in dem Ausführungsbeispiel der Fig. 6 eine Gerade, die über eine Geradengleichung in das Koordinatensystem X, Y eingegeben sein kann.

Fig. 6 zeigt eine Ausgangssituation, in der die Längsachse des Maschinenrahmens 2, die Längsmittelachse 17 des Transportbandes 12 und die Trajektorie 25 kollinear sind. Hat sich die Fräsmaschine 1a nach der Initialisierung zu der Position der Bezugspunkte A' $(x_1',y_1')$ und B' $(x_2', y_2')$ bewegt, kann der Abstand a zur Trajektorie 25 wie folgt berechnet werden:

Zunächst ist der Winkel $\beta$ zwischen der Längsachse 9 des Maschinenrahmens 2 und der zu der Y-Achse des Koordinatensystems X, Y parallelen Trajektorie 25 zu bestimmen, wobei die Länge zwischen den Bezugspunkten A und B mit $l_1$ gegeben ist und die Länge der Gegenkathete b in dem rechtwinkligen Dreieck, bei dem die Länge $l_1$ die Hypotenuse bildet, aus der Differenz der x-Koordinaten der Bezugspunkte B' und A' wie folgt berechnet werden:

$$b = |x_1' - x_2'|$$

Der Winkel $\beta$ zwischen der Längsachse 9 und der Y-Achse des Koordinatensystems und somit zu der Trajektorie 25 ergibt sich dann für die gestrichelte Position der Fräsmaschine zu

$$\beta = \arcsin[(x_1' - x_2')/ l_1]$$

Zur Berechnung des einzustellenden Schwenkwinkels $\alpha$ ergibt sich der Abstand a des Bezugspunkts A' zu der Trajektorie 25 aus

$$a = |x_1' - x_1|,$$

wobei $x_1$ auch die gleichbleibende x-Koordinate der Trajektorie 25 ist.

Der einzustellende Winkel $\alpha$ ergibt sich aus der Summe des zuvor bestimmten Winkels $\beta$ und des Winkels $\gamma$, wobei $\gamma$ der sich bei Einstellung des Schwenkwinkels $\beta$ ergebende Winkel zwischen der Längsmittelachse 17 des Transportbandes 12 und der Trajektorie 25 ist.

Mit der gegebenen Länge $l_2$ zwischen der Schwenkachse 23 und dem Bezugspunkt des Transportbandes 12 als Projektion auf das Koordinatensystem kann der Winkel γ mit

$$\gamma = \arcsin(a / l_2)$$

berechnet werden.

In dem Ausführungsbeispiel der Fig. 6 ist der Bezugspunkt des Transportbandes 12 das Abwurfende 13 des Transportbandes, an dem auch die virtuelle Achse 19 vorgesehen sein kann.

Anstelle der Positionsbestimmung zweier Bezugspunkte auf dem Maschinenrahmen A, B kann auch die Bestimmung lediglich der Position eines Punktes vorgesehen sein, wenn zusätzlich die Winkeländerung der Längsachse 9 des Maschinenrahmens relativ zur Ausgangsposition anhand der zurückgelegten Fahrstrecke und der dabei vorliegenden Lenkwinkel bestimmt wird. Der Winkel β kann somit direkt bestimmt werden.

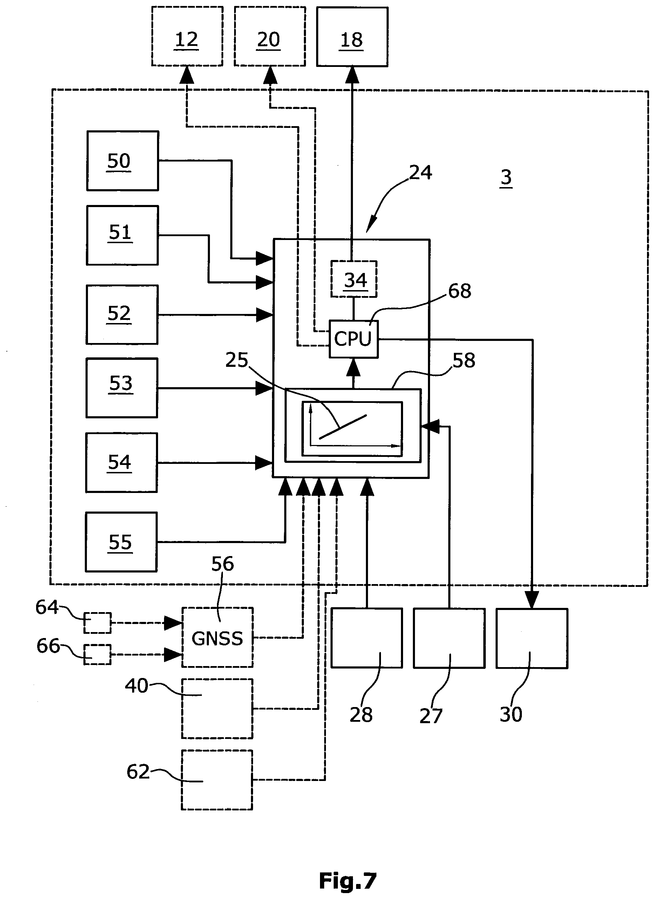

Fig. 7 zeigt eine mögliche Struktur des Steuerungssystems 24 innerhalb der Steuerung 3 und den damit zusammenwirkenden Elementen. Hierbei kann das Steuerungssystem 24 ausgehend von einer Ausgangsposition der Fräsmaschine 1a, 1b bei der Initialisierung zur Nachverfolgung der Positionsänderung der Fräsmaschine 1a, 1b Signale 50 bis 55 aus der Steuerung 3 oder direkt von entsprechenden Detektoren erhalten.

Insbesondere kann die Steuerung 3 Signale 50 bezüglich des Lenkwinkels und des Lenkmodus, Signale 51 bezüglich der Fahrgeschwindigkeit, Signale 52 bezüglich der Wegstrecke, Signale 53 bezüglich des aktuellen Schwenkwinkels, Signale 54 bezüglich der Fördergeschwindigkeit des Transportbandes 12, sowie Signale 55 bezüglich des Höhenwinkels des Transportbandes an das Steuerungssystem 24 übertragen.

Das Steuerungssystem 24 erhält außerdem Signale der Bildaufnahmeeinrichtung 28, des Kontrollbedienelementes 27 und gibt ihrerseits Videosignale an die Bildanzeigeeinrichtung 30 aus.

Außerdem kann das Steuerungssystem 24 bei allen Ausführungsbeispielen eine Überwachungseinrichtung 34 aufweisen, die den berechneten Schwenkwinkel α mit einem vorgegebenen maximalen Schwenkwinkelbereich für den Schwenkwinkel vergleicht und bei einem Überschreiten des maximal möglichen oder zulässigen Schwenkwinkels ein Alarmsignal für die Bedienungsperson und/oder ein Stoppsignal für die Fräsmaschine 1a, 1b erzeugt.

Unabhängig davon kann die Überwachungseinrichtung 34 auch dann ein Alarmsignal für die Bedienungsperson oder ein Stoppsignal für die Fräsmaschine 1a, 1b erzeugen, wenn der maximal mögliche oder zulässige Schwenkwinkelbereich des Transportbandes nicht ausreicht, um der Trajektorie zu folgen.

Das Steuersystem 24 gibt über eine CPU-Rechnereinheit 68 auch das Steuer- bzw. Regelsignal für den Schwenkwinkel α zur Ansteuerung der Kolben-Zylindereinheiten 18 zum Einstellen des Schwenkwinkels aus, wobei die Überwachungseinrichtung 34 zwischengeschaltet sein kann.

Außerdem kann das Steuerungssystem 24 neben der Ansteuerung der Kolben-Zylindereinheiten 18 zusätzlich auch die Ansteuerung der Kolben-Zylindereinheiten 20 und/oder eine Änderung der Fördergeschwindigkeit des Transportbandes 12 vornehmen.

Die automatische Steuerung des Schwenkwinkels α erfolgt derart, dass der Bezugspunkt des Transportbandes 12 stets auf der Trajektorie 25 verbleibt.

Die Berechnung des Schwenkwinkels α erfolgt dabei auf der Basis der bekannten Abmessungen des Maschinenrahmens 2 und des Transportbandes 12 und den im Speicher 58 abgelegten Daten des Koordinatensystems und der Trajektorie 25.

Wenn der Initialisierungsprozess gestartet wird, kann die Lage des Koordinatensystems in dem Speicher 58 festgelegt werden, sowie eine vorzugebende Trajektorie 25 ausgewählt oder verändert und in das Koordinatensystem gespeichert werden. Bei der Initialisierung wird das Koordinatensystem vorzugweise parallel zur Längsachse 9 des Maschinenrahmens 2 ausgerichtet und der Ursprung des Koordinatensystems z.B. auf die Schwenkachse 23 gelegt. Es besteht auch jederzeit die Möglichkeit, Ursprung und Ausrichtung des Koordinatensystems X, Y relativ zum Maschinenrahmen 2 neu zu bestimmen und somit das Koordinatensystem neu zu initialisieren, wie dies beispielsweise in der Fig. 6 mit dem Koordinatensystem X', Y' gezeigt ist. Bei der Initialisierung sind vorzugsweise die Längsachse 9 des Maschinenrahmens 2 sowie die Längsmittelachse 17 des Transportbandes 12, sowie die Ladefläche 15 des Transportmittels 10 kollinear ausgerichtet.

Über das Bedienelement 27 können unterschiedliche Trajektorien 25 ausgewählt werden und in dem Koordinatensystem positioniert werden. Im einfachsten Fall ist die Trajektorie eine Gerade. Mit Hilfe des Bedienelementes 27 kann die Lage der Trajektorie 25 in dem Koordinatensystem verändert werden, beispielsweise kann die Trajektorie 25, wie in Fig. 4 gezeigt, um die virtuelle vertikale Schwenkachse 19 verschwenkt werden.

Die z.B. über das Bedienelement 27 oder über eine Eingabeeinrichtung der Steuerung 3 eingegebenen Informationen über die Trajektorie 25, sowie ggf. die Videosignale des Bildaufnahmesystems 28 können zusammengefasst an die Bildanzeigeeinrichtung 30 ausgegeben werden, so dass die Bedienungsperson den nach der Initialisierung der Fräsmaschine 1a, 1b startenden Automatikbetrieb der Schwenkwinkelsteuerung auf der Bildanzeigeeinrichtung 30 beobachten kann und ggf. mit Hilfe des Kontrollbedienelementes 27 die Orientierung der Trajektorie 25 beeinflussen kann.

Desweiteren kann das Steuerungssystem 24 Signale eine Abstandmesseinrichtung 40 erhalten, mit der der Abstand zu einem folgenden oder vorausfahrenden Transportmittel 10 detektierbar ist.

Das Steuerungssystem 24 kann die Lage der Ladefläche 15 und/oder des Transportbandes 12 fortlaufend mit Hilfe des Bildaufnahmesystems 28 oder eines nicht-optischen elektronischen Ortungssystems 62 erfassen, das Daten zur Lagebestimmung der Ladefläche 15 und zur Anzeige auf der Bildanzeigeeinrichtung 30 in Relation zu dem Maschinenrahmen 2 oder zu dem Transportbandes 12 liefert. Die Informationen des Bildaufnahmesystems 28 kann durch für sich bekannte Bildanalysemethoden ausgewertet werden. Ein Beispiel für ein nicht optisches elektronisches Ortungssystems ist ein Radiofrequenz-Identifikationssystem (RFID), das zusätzlich noch die Möglichkeit der Identifikation einer bestimmten Ladefläche 15 eines bestimmten Transportmittels 10 ermöglicht.

Bei der Lokalisierung der Ladefläche 15 mit RFID können stationäre RFID-Tags an dem Transportmittel 10 insbesondere an der Ladefläche 15 verwendet werden.

Alternativ oder zusätzlich können Signale einer GNSS-Einrichtung 56, z.B. GPS, GLONASS, Galileo, zur Positionsbestimmung eingegeben werden. Der Maschinenrahmen 2 verfügt vorzugsweise über wenigstens zwei an verschiedenen Stellen der Maschine angebrachte GNSS-Empfänger 64, 66, die neben der Position auch die Ausrichtung des Maschinenrahmens 2 bestimmen.

Die Trajektorie 25 wird z.B. mit Hilfe der Bedieneinrichtung 27 relativ zum Koordinatensystem in dem Speicher 58 festgelegt. Bei der Initialisierung lässt sich beispielsweise die Trajektorie 25 zunächst relativ zum Maschinenrahmen 2 festlegen. Aus der Lage Trajektorie 25 in Relation zu den Koordinaten des Maschinenrahmens 2 oder der Schwenkachse 23 lassen sich somit die Koordinaten der Trajektorie 25 im GNSS-Koordinatensystem ermitteln und in den Speicher 58 übertragen.

Sobald die Fräsmaschine 1a, 1b ihre Position ändert, werden die geänderten GNSS-Positionskoordinaten der Maschine und die Maschinenausrichtung erfasst, während die Koordinaten der Trajektorie im GNSS-Koordinatensystem unverändert bleiben. Somit kann die Relativbewegung zwischen Maschinenrahmen 2 und Trajektorie 25, sowie die Winkeländerung zwischen Trajektorie 25 und Längsachse 9 des Maschinenrahmens 2 ermittelt und damit der Schwenkwinkel $\alpha$ so gesteuert werden, dass der Bezugspunkt des Transportbandes 12 auf den Koordinaten der Trajektorie 25 liegt.

Für den Fall der Änderung des Verlaufs der Trajektorie 25, ist es erforderlich, die die Trajektorie 25 beschreibenden Koordinaten zu ändern.

Die Positionsbestimmung der Maschinenposition und deren Ausrichtung ist bekannter Stand der Technik.

In Fig. 4 sind beispielsweise zwei GPS-Sensoren 64, 66 gezeigt, mit denen die Positionsbestimmung und die Bestimmung der Ausrichtung des Maschinenrahmens 3 möglich ist.

**Patentansprüche**

1. Selbstfahrende Fräsmaschine (1a, 1b), insbesondere Straßenfräse oder Surface Miner oder Recycler, zum Fräsen einer Bodenoberfläche (6),

   - mit einem Maschinenrahmen (2) mit einer Längsachse (9),
   - mit einem Fahrwerk mit Rädern oder Kettenlaufwerken, die den Maschinenrahmen (2) tragen,
   - mit einer Steuerung (3) für den Fahr-, und Fräsbetrieb,
   - mit einer höhenverstellbaren Arbeitswalze (22),
   - mit einem in Fahrtrichtung der Fräsmaschine (1a, 1b) vor oder hinter der Arbeitswalze (22) angeordneten schwenkbaren Transportband (12) mit einem Abwurfende (13), von dem abgearbeitetes Fräsgut (14) auf eine Auftreffstelle (16) auf einer Ladefläche (15) eines Transportmittels (10) abwerfbar ist,
   - wobei das Transportband (12) wenigstens um eine im Wesentlichen orthogonal zum Maschinenrahmen (2) verlaufende erste Schwenkachse (23) seitlich unter einem Schwenkwinkel verschwenkbar ist,
   - wobei die Steuerung (3) ein Steuerungssystem (24) aufweist, das zumindest den Schwenkwinkel des Transportbandes (12) im Fahr - und Fräsbetrieb automatisch steuert,

   **dadurch gekennzeichnet,dass**
   das Steuerungssystem (24) zumindest in Abhängigkeit einer in einem von Position und Ausrichtung des Maschinenrahmens (2) unabhängigen ortsfesten Koordinatensystem frei vorgebbaren, virtuellen Trajektorie (25) für die Positionierung des Transportbandes (12) zumindest den Schwenkwinkel des Transportbandes (12) derart automatisch steuert oder regelt, dass ein Bezugspunkt des Transportbandes (12), vorzugsweise das Abwurfende (13) des Transportbandes (12) oder die Auftreffstelle (16) des abgearbeiteten Fräsgutes (14) bei einer Positionsveränderung des Maschinenrahmens (2) innerhalb des Koordinatensystems stets auf der vorgegebenen Trajektorie (25) verbleibt.

2. Fräsmaschine nach Anspruch 1, **dadurch gekennzeichnet, dass** das Steuerungssystem (24) die aktuelle Position und Ausrichtung des Maschinenrahmens (2) in dem Koordinatensystem fortlaufend erfasst und in Abhängigkeit der Lage der ortsfesten Trajektorie (25) relativ zu dem Maschinenrahmen (2) oder zum Bezugspunkt des Transportbandes (12) den einzustellenden Schwenkwinkel bestimmt.

3. Fräsmaschine nach Anspruch 1 oder 2, **dadurch ge-**

**kennzeichnet, dass** in dem Steuerungssystem (24) die Lage der Trajektorie (25) relativ zu dem ortsfesten Koordinatensystem veränderbar ist und dass das Steuerungssystem (24) den aktuellen Schwenkwinkel bei veränderter Lage der Trajektorie (25) im Koordinatensystem neu berechnet.

4. Fräsmaschine nach einem der Ansprüche 1 bis 3, **dadurch gekennzeichnet, dass** das Steuerungssystem (24) ein von dem Bedienungsperson bedienbares Kontrollbedienungselement (27) aufweist, mit dem bei einer gewünschten Veränderung der Lage der aktuellen Trajektorie (25) ein geänderter Verlauf der Trajektorie (25) in dem Koordinatensystem festlegbar ist oder mit dem die Ausrichtung der Trajektorie (25) in dem Koordinatensystem um eine voreingestellte, im Wesentlichen orthogonal zur Bodenoberfläche (6) verlaufende virtuelle Drehachse (19) schwenkbar ist.

5. Fräsmaschine nach einem der Ansprüche 1 bis 4, **dadurch gekennzeichnet, dass** das Steuerungssystem (24) eine Bildanzeigeeinrichtung (30) aufweist, die zumindest die relative Lage der aktuell gewählten Trajektorie (25) in Relation zu dem Transportband (12) und/oder der Längsachse (9) des Maschinenrahmens (2) und/oder zu der Lage der Ladefläche (15) des Transportmittels (10) grafisch darstellt.

6. Fräsmaschine nach einem der Ansprüche 1 bis 5 , **dadurch gekennzeichnet, dass** das Steuerungssystem (24) zur Berechnung der aktuellen Position und Ausrichtung des Maschinenrahmens (2) im Koordinatensystem den Lenkeinschlag und die zurückgelegte Fahrstrecke oder den Lenkeinschlag und die momentane Fahrgeschwindigkeit fortlaufend erfasst oder mit Hilfe einer GNSS-Positionsbestimmungseinrichtung (56) Position und Ausrichtung des Maschinenrahmens (2) relativ zu dem Koordinatensystem fortlaufend erfasst.

7. Fräsmaschine nach einem der Ansprüche 1 bis 6, **dadurch gekennzeichnet, dass** das Steuerungssystem (24) den Abstand (a) zwischen einem Referenzpunkt, vorzugsweise auf der Längsachse (9) des Maschinenrahmens (2), und der Trajektorie (25) und den Winkel β zwischen der Längsachse (9) des Maschinenrahmens (2) und der Trajektorie (25) bestimmt.

8. Fräsmaschine nach einem der Ansprüche 1 bis 7, **dadurch gekennzeichnet, dass** das Transportband (12) um eine orthogonal zur ersten Schwenkachse (23) verlaufende zweite Achse (21) unter einem vorgegebenen Höhenwinkel verschwenkbar ist, wobei das Transportband (12) das Fräsgut (14) mit einer vorgegebenen Fördergeschwindigkeit auf die Ladefläche (15) des Transportmittels (10) abwirft, und dass das Steuerungssystem (24) den Schwenkwinkel des schwenkbaren Transportbandes (12) zusätzlich in Abhängigkeit mindestens eines der nachfolgenden Parameter, nämlich der Längs- und Querneigung des Maschinenrahmens (2), der Vorschubgeschwindigkeit, dem Höhenwinkel des Transportbandes (12) und der Fördergeschwindigkeit des Fräsgutes (14) derart fortlaufend automatisch steuert, dass das schwenkbare Transportband (12) in jeder Lenksituation bei Vorwärtsfahrt oder Rückwärtsfahrt einen vorgegebenen Schwenkwinkel annimmt, bei dem der Bezugspunkt (13) des Transportbandes (12) im Wesentlichen entlang der Trajektorie (25) geführt ist.

9. Fräsmaschine nach einem der Ansprüche 1 bis 8, **dadurch gekennzeichnet, dass** das Transportband (12) um eine orthogonal zur ersten Schwenkachse (23) verlaufende zweite Achse (21) unter einem vorgegebenen Höhenwinkel neigbar ist, wobei das Transportband (12) das Fräsgut (14) mit einer vorgegebenen Fördergeschwindigkeit auf die Ladefläche (15) des Transportmittels (10) abwirft, und dass das Steuerungssystem (24) außer dem Schwenkwinkel des schwenkbaren Transportbandes (12) den Höhenwinkel und/oder die Fördergeschwindigkeit des Transportbandes (12) derart automatisch steuert oder regelt, dass der Bezugspunkt des Transportbandes (12) bei einer Positionsveränderung des Maschinenrahmens (2) innerhalb des Koordinatensystems stets auf der vorgegebenen Trajektorie (25) verbleibt.

10. Fräsmaschine nach einem der Ansprüche 1 bis 9, **dadurch gekennzeichnet, dass** das Steuerungssystem (24) die Lage der Ladefläche (15) im Koordinatensystem fortlaufend ortet, und den Schwenkwinkel steuert oder regelt, um das Abwurfende (13) des Transportbandes (12) oder die Auftreffstelle (16) entlang der vorgegebenen Trajektorie (25) stets innerhalb der Ladefläche (15) zu halten.

11. Fräsmaschine nach einem der Ansprüche 5 bis 10, **dadurch gekennzeichnet, dass** das Steuerungssystem (24) eine Bildaufnahmeeinrichtung (28) aufweist, die eine reale oder virtuelle Sicht aus der Perspektive der Bedienungsperson oder aus der Vogelperspektive, vorzugsweise über der virtuellen Drehachse (19) der Trajektorie (25), erzeugt, wobei das Steuerungssystem (24) die virtuelle Trajektorie (25) in das von der Bildaufnahmeeinrichtung (28) erzeugte und auf der Bildanzeigeeinrichtung (30) angezeigte Bild einblendet.

12. Verfahren zum Steuern einer selbstfahrenden Fräsmaschine (1a, 1b) zum Fräsen einer Bodenoberfläche (6), insbesondere einer Straßenfräsmaschine, einem Surface Miner oder einem Recycler, bei dem

- der Fahr -, und Fräsbetrieb von einer Steuerung (3) gesteuert wird,
- die Fräsmaschine (1a, 1b) von einem lenkbaren Fahrwerk mit Rädern oder Kettenlaufwerken getragen wird,
- das von einer Arbeitswalze (22) im Fräsbetrieb abgearbeitete Fräsgut (14) mit einem Transportband (12) mit einem Abwurfende (13) abtransportiert wird, und von dem Abwurfende (13) auf eine Auftreffstelle (16) auf einer Ladefläche (15) eines Transportmittels (10) geworfen wird,
- wobei das Transportband (12) zumindest seitlich im Fahr-, und Fräsbetrieb automatisch verschwenkt werden kann,

**dadurch gekennzeichnet,dass**
eine in einem von Position und Ausrichtung des Maschinenrahmens (2) unabhängigen ortsfesten Koordinatensystem frei wählbare virtuelle Trajektorie (25) für die Positionierung des Transportbandes (12) oder der Auftreffstelle (16) durch Eingabe in die Steuerung (3) vorgegeben wird, und dass
zumindest der Schwenkwinkel des Transportbandes (12) derart gesteuert oder geregelt wird, dass der Bezugspunkt des Transportbandes (12) bei einer Positionsveränderung der Fräsmaschine (1a,1b) in dem Koordinatensystem stets auf der vorgegebenen Trajektorie (25) gehalten wird.

**13.** Verfahren nach Anspruch 12, **dadurch gekennzeichnet, dass** die aktuelle Position und Ausrichtung des Maschinenrahmens (2) in dem Koordinatensystem fortlaufend erfasst wird und in Abhängigkeit der Lage der ortsfesten Trajektorie (25) relativ zu dem Maschinenrahmen (2) oder zum Bezugspunkt des Transportbandes (12) der einzustellende Schwenkwinkel bestimmt wird.

**14.** Verfahren nach Anspruch 12 oder 13, **dadurch gekennzeichnet, dass** bei einer gewünschten Änderung des Verlaufs der Trajektorie (25) eine andere Trajektorie (25) in das Koordinatensystem eingegeben wird oder die Ausrichtung der Trajektorie (25) in dem Koordinatensystem um eine voreingestellte, orthogonal zur Bodenoberfläche (6) verlaufende virtuelle Drehachse (19), vorzugsweise auf oder in Verlängerung zu dem Transportband (12) geändert wird.

**15.** Verfahren nach einem der Ansprüche 12 bis 14, **dadurch gekennzeichnet, dass** zur Berechnung der aktuellen Position und Ausrichtung des Maschinenrahmens (2) im Koordinatensystem der Lenkeinschlag und die zurückgelegte Fahrstrecke oder der Lenkeinschlag und die momentane Fahrgeschwindigkeit fortlaufend erfasst wird oder mit Hilfe einer GNSS- Positionsbestimmungseinrichtung Position und Ausrichtung des Maschinenrahmens (2) relativ zu dem Koordinatensystem fortlaufend erfasst wird.

**Claims**

**1.** Self-propelled milling machine (1a, 1b), specifically, road milling machine or surface miner or recycler, for milling a ground surface (6),

- comprising a machine frame (2) with a longitudinal axis (9),
- comprising a chassis with wheels or tracked ground-engaging units which support the machine frame (2),
- comprising a controller (3) for the travelling and milling operation,
- comprising a height-adjustable working drum (22),
- comprising a slewable transport conveyor (12) arranged in front of or behind the working drum (22) as seen in the direction of travel of the milling machine (1a, 1b) with a discharge end (13) from which worked-off milling material (14) is dischargeable onto a point of impingement (16) on a loading surface (15) of a means of transport (10),
- wherein the transport conveyor (12) is slewable about at least a first slewing axis (23) extending essentially orthogonal to the machine frame (2) laterally under a slewing angle,
- wherein the controller (3) comprises a control system (24) which controls at least the slewing angle of the transport conveyor (12) automatically in the travelling and milling operation,

**characterized in that**
the control system (24), at least as a function of a virtual trajectory (25) for positioning the transport conveyor (12) which is freely specifiable in a stationary coordinate system that is independent of the position and alignment of the machine frame (2), controls or regulates at least the slewing angle of the transport conveyor (12) automatically in such a way that a reference point of the transport conveyor (12), preferably the discharge end (13) of the transport conveyor (12) or the point of impingement (16) of the worked-off milling material (14), always remains on the specified trajectory (25) in the case of a change in position of the ma-chine frame (2) within the coordinate system.

**2.** Milling machine according to claim 1, **characterized in that** the control system (24) continuously detects the current position and alignment of the machine frame (2) in the coordinate system and determines the slewing angle to be adjusted as a function of the position of the stationary trajectory (25) relative to the machine frame (2) or to the reference point of the transport conveyor (12).

3. Milling machine according to claim 1 or 2, **characterized in that** the position of the trajectory (25) relative to the stationary coordinate system is alterable in the control system (24), and that the control system (24) recalculates the current slewing angle in case of an altered position of the trajectory (25) in the coordinate system.

4. Milling machine according to any one of the claims 1 to 3, **characterized in that** the control system (24) comprises a control operating element (27) operable by the operator by means of which a different course of the trajectory (25) is determinable in the coordinate system in the case of a desired change in the position of the current trajectory (25), or by means of which the alignment of the trajectory (25) in the coordinate system is slewable about a preset virtual axis of rotation (19) extending essentially orthogonal to the ground surface (6).

5. Milling machine according to any one of the claims 1 to 4, **characterized in that** the control system (24) comprises an image-displaying device (30) which graphically represents at least the relative position of the currently selected trajectory (25) in relation to the transport conveyor (12) and/or to the longitudinal axis (9) of the machine frame (2) and/or to the position of the loading surface (15) of the means of transport (10).

6. Milling machine according to any one of the claims 1 to 5, **characterized in that** the control system (24), to calculate the current position and alignment of the machine frame (2) in the coordinate system, continuously detects the steering angle and the distance travelled, or the steering angle and the current travel speed, or continuously detects the position and alignment of the machine frame (2) relative to the coordinate system by means of a GNSS position determination device (56).

7. Milling machine according to any one of the claims 1 to 6, **characterized in that** the control system (24) determines the distance (a) between a reference point, preferably on the longitudinal axis (9) of the machine frame (2), and the trajectory (25), and the angle β between the longitudinal axis (9) of the machine frame (2) and the trajectory (25).

8. Milling machine according to any one of the claims 1 to 7, **characterized in that** the transport conveyor (12) is pivotable about a second axis (21) extending orthogonal to the first slewing axis (23) under a specified elevation angle, wherein the transport conveyor (12) discharges the milling material (14) onto the loading surface (15) of the means of transport (10) at a specified conveying speed, and that the control system (24) additionally continuously controls the slewing angle of the slewable transport conveyor (12) automatically as a function of at least one of the following parameters, namely, the longitudinal and transverse inclination of the machine frame (2), the advance speed, the elevation angle of the transport conveyor (12), and the conveying speed of the milling material (14), in such a way that, in any steering situation during forward travel or reverse travel, the slewable transport conveyor (12) assumes a specified slewing angle in which the reference point (13) of the transport conveyor (12) is essentially guided along the trajectory (25).

9. Milling machine according to any one of the claims 1 to 8, **characterized in that** the transport conveyor (12) is inclinable about a second axis (21) extending orthogonal to the first slewing axis (23) under a specified elevation angle, wherein the transport conveyor (12) discharges the milling material (14) onto the loading surface (15) of the means of transport (10) at a specified conveying speed, and that, in addition to the slewing angle of the slewable transport conveyor (12), the control system (24) controls the elevation angle and/or the conveying speed of the transport conveyor (12) automatically in such a way that the reference point of the transport conveyor (12) always remains on the specified trajectory (25) in the case of a change in position of the machine frame (2) within the coordinate system.

10. Milling machine according to any one of the claims 1 to 9, **characterized in that** the control system (24) continuously locates the position of the loading surface (15) in the coordinate system and controls or regulated the slewing angle in order to always keep the discharge end (13) of the transport conveyor (12) or the point of impingement (16) along the specified trajectory (25) within the loading surface (15).

11. Milling machine according to any one of the claims 5 to 10, **characterized in that** the control system (24) comprises an image-capturing device (28) which creates a real or virtual view from the perspective of the operator or from the bird's eye perspective, preferably above the virtual axis of rotation (19) of the trajectory (25), wherein the control system (24) inserts the virtual trajectory (25) into the image created by the image-capturing device (28) and displayed on the image-displaying device (30).

12. Method for controlling a self-propelled milling machine (1a, 1b) for milling a ground surface (6), specifically, a road milling machine, a surface miner, or a recycler, in which

- the travelling and milling operation is controlled by a controller (3),
- the milling machine (1a, 1b) is supported by a steerable chassis comprising wheels or tracked ground-engaging units,
- the milling material (14) worked off by a working drum (22) in the milling operation is transported away by a transport conveyor (12) comprising a discharge end (13), and is discharged, from the discharge end (13), onto a point of impingement (16) on a loading surface (15) of a means of transport (10),
- wherein the transport conveyor (12) can be automatically slewed at least laterally in the travelling and milling operation,

**characterized in that**
a virtual trajectory (25) for positioning the transport conveyor (12) or the point of impingement (16) which is freely selectable in a stationary coordinate system that is independent of the position and alignment of the machine frame (2) is specified by means of entry into the controller (3), and that
at least the slewing angle of the transport conveyor (12) is controlled or regulated in such a way that the reference point of the transport conveyor (12) is always kept on the specified trajectory (25) in case of a change in position of the milling machine (1a, 1b) in the coordinate system.

13. Method according to claim 12, **characterized in that** the current position and alignment of the machine frame (2) in the coordinate system is continuously detected and the slewing angle to be adjusted is determined as a function of the position of the stationary trajectory (25) relative to the machine frame (2) or to the reference point of the transport conveyor (12).

14. Method according to claim 12 or 13, **characterized in that**, in the case of a desired change in the course of the trajectory (25), a different trajectory (25) is entered in the coordinate system, or the alignment of the trajectory (25) in the coordinate system is altered about a preset virtual axis of rotation (19) extending orthogonal to the ground surface (6) and preferably located on or in the extension of the transport conveyor (12).

15. Method according to any one of the claims 12 to 14, **characterized in that**, to calculate the current position and alignment of the machine frame (2) in the coordinate system, the steering angle and the distance travelled, or the steering angle and the current travel speed are continuously detected, or the position and alignment of the machine frame (2) relative to the coordinate system is continuously detected by means of a GNSS position determination device.

**Revendications**

1. Fraiseuse automotrice (1a, 1b), en particulier fraiseuse routière ou surface miner ou recycler, destinée au fraisage d'une surface de sol (6),

- avec un châssis de machine (2) doté d'un axe longitudinal (9),
- avec un train de roulement doté de roues ou de mécanismes d'entraînement à chaînes qui portent le châssis de machine (2),
- avec une commande (3) pour le mode conduite et fraisage,
- avec un cylindre de travail (22) réglable en hauteur,
- avec une bande de transport (12) pivotante disposée devant ou derrière le cylindre de travail (22) dans le sens de la marche de la fraiseuse (1a, 1b), dotée d'une extrémité de déversement (13) à partir de laquelle du fraisat (14) traité peut être déversé sur une position d'impact (16) sur une surface de charge (15) d'un moyen de transport (10),
- la bande de transport (12) pouvant, latéralement, en formant un angle de pivotement, pivoter au moins autour d'un premier axe de pivotement (23) placé essentiellement orthogonal au châssis de machine (2),
- la commande (3) comportant un système de commande (24) qui commande automatiquement au moins l'angle de pivotement de la bande de transport (12) dans le mode conduite et fraisage,

**caractérisée en ce que**,
pour le positionnement de la bande de transport (12), le système de commande (24) commande ou régule automatiquement au moins l'angle de pivotement de la bande de transport (12) au moins en fonction d'une trajectoire (25) virtuelle, pouvant être prédéfinie librement dans un système de coordonnées fixe indépendant de la position et de l'orientation du châssis de machine (2), de telle sorte qu'un point de référence de la bande de transport (12), de préférence l'extrémité de déversement (13) de la bande de transport (12) ou l'emplacement d'impact (16) du fraisat (14) traité demeure sur la trajectoire (25) prédéfinie lors d'une modification de position du châssis de machine (2) à l'intérieur du système de coordonnées.

2. Fraiseuse selon la revendication 1, **caractérisée en ce que** le système de commande (24) détecte de façon continue la position et l'orientation actuelles du châssis de machine (2) dans le système de coordonnées et définit l'angle de pivotement à régler en fonction de l'emplacement de la trajectoire (25) fixe par rapport au châssis de machine (2) ou au point de référence de la bande de transport (12).

3. Fraiseuse selon la revendication 1 ou 2, **caractérisée en ce que**, dans le système de commande (24), l'emplacement de la trajectoire (25) relativement au système de coordonnées fixe peut être modifié, et **en ce que** le système de commande (24) recalcule l'angle de pivotement actuel en cas de modification de l'emplacement de la trajectoire (25) dans le système de coordonnées.

4. Fraiseuse selon l'une des revendications 1 à 3, **caractérisée en ce que** le système de commande (24) comporte un élément de manoeuvre de contrôle (27), pouvant être manoeuvré par l'opérateur, avec lequel, lors d'une modification souhaitée de l'emplacement de la trajectoire (25) actuelle, un tracé modifié de la trajectoire (25) peut être stipulé dans le système de coordonnées, ou avec lequel l'orientation de la trajectoire (25) dans le système de coordonnées peut être amenée à pivoter autour d'un axe de rotation (19) virtuel préréglé placé essentiellement à angle droit par rapport à la surface du sol (6).

5. Fraiseuse selon l'une des revendications 1 à 4, **caractérisée en ce que** le système de commande (24) comporte un dispositif d'affichage d'images (30) qui représente graphiquement au moins l'emplacement relatif de la trajectoire (25) choisie actuellement en relation avec la bande de transport (12) et/ou avec l'axe longitudinal (9) du châssis de machine (2) et/ou avec l'emplacement de la surface de charge (15) du moyen de transport (10).

6. Fraiseuse selon l'une des revendications 1 à 5, **caractérisée en ce que**, pour le calcul de la position et de l'orientation actuelles du châssis de machine (2) dans le système de coordonnées, le système de commande (24) détecte de façon continue le braquage de la direction et le trajet parcouru ou le braquage de la direction et la vitesse de conduite instantanée ou, à l'aide d'un dispositif de détermination de position GNSS (56), détecte de façon continue la position et l'orientation du châssis de machine (2) relativement au système de coordonnées.

7. Fraiseuse selon l'une des revendications 1 à 6, **caractérisée en ce que** le système de commande (24) définit l'espacement (a) entre un point de référence , de préférence sur l'axe longitudinal (9) du châssis de machine (2), et la trajectoire (25), et l'angle β entre l'axe longitudinal (9) du châssis de machine (2) et la trajectoire (25).

8. Fraiseuse selon l'une des revendications 1 à 7, **caractérisée en ce que** la bande de transport (12) peut pivoter autour d'un deuxième axe (21) s'étendant à angle droit par rapport au premier axe de pivotement (23) en formant un angle d'élévation prédéfini, la bande de transport (12) rejetant le fraisat (14) à une vitesse de transport prescrite sur la surface de charge (15) du moyen de transport (10), et **en ce que** le système de commande (24) commande automatiquement de façon continue l'angle de pivotement de la bande de transport (12) pivotante en outre en fonction d'au moins un des paramètres suivants, à savoir l'inclinaison longitudinale et transversale du châssis de machine (2), la vitesse d'avancement, l'angle d'élévation de la bande de transport (12) et la vitesse de transport du fraisat (14) de telle sorte que la bande de transport (12) pivotante, dans n'importe quelle situation de braquage, en marche avant ou en marche arrière, adopte un angle de pivotement predéfini pour lequel le point de référence (13) de la bande de transport (12) est guidé essentiellement le long de la trajectoire (25).

9. Fraiseuse selon l'une des revendications 1 à 8, **caractérisée en ce que** la bande de transport (12) peut être inclinée autour d'un deuxième axe (21) s'étendant à angle droit par rapport au premier axe de pivotement (23) sous un angle d'élévation prescrit, la bande de transport (12) rejetant le fraisat (14) à une vitesse de transport prescrite sur la surface de charge (15) du moyen de transport (10), et **en ce que** le système de commande (24), outre l'angle de pivotement de la bande de transport (12) pivotante, calcule ou régule automatiquement l'angle d'élévation et/ou la vitesse de transport de la bande de transport (12) de telle sorte que le point de référence de la bande de transport (12), lors d'une modification de position du châssis de machine (2) à l'intérieur du système de coordonnées, demeure de façon continue sur la trajectoire (25) prédéfinie.

10. Fraiseuse selon l'une des revendications 1 à 9, **caractérisée en ce que** le système de commande (24) localise de façon continue l'emplacement de la surface de charge (15) dans le système de coordonnées, et commande ou régule l'angle de pivotement pour maintenir constamment à l'intérieur de la surface de charge (15) l'extrémité de déversement (13) de la bande de transport (12) ou l'emplacement d'impact (16) le long de la trajectoire (25) prédéfinie.

11. Fraiseuse selon l'une des revendications 5 à 10, **caractérisée en ce que** le système de commande (24) comporte un dispositif d'enregistrement d'images (28) qui produit une vue réelle ou virtuelle à partir de la perspective de l'opérateur ou à partir de la perspective aérienne, de préférence sur l'axe de rotation (19) virtuel de la trajectoire (25), le système de commande (24) incrustant la trajectoire (25) virtuelle dans l'image produite par le dispositif d'enregistrement d'images (28) et affichée sur le dispositif d'affichage d'image (30).

**12.** Procédé de commande d'une fraiseuse automotrice (1a, 1b) pour le fraisage d'une surface de sol (6), en particulier d'une fraiseuse routière ou surface miner ou recycler, dans lequel

- le mode conduite et fraisage est commandé par une commande (3),
- la fraiseuse automotrice (1a, 1b) est portée par un train de roulement, pouvant être dirigé, doté de roues ou de mécanismes d'entraînement à chaînes,
- le fraisat (14) traité par un cylindre de travail (22) dans le mode fraisage est évacué avec une bande de transport (12) dotée d'une extrémité de déversement (13), et éjecté à partir de l'extrémité de déversement (13) vers un emplacement d'impact (16) sur une surface de charge (15) d'un moyen de transport (10),
- la bande de transport (12) pouvant être amenée à pivoter automatiquement au moins latéralement dans le mode conduite et fraisage,

**caractérisé en ce**
**qu'**une trajectoire (25) virtuelle, pouvant être choisie librement, dans un système de coordonnées fixe indépendant de la position et de l'orientation du châssis de machine (2) est prédéfinie par une entrée dans la commande (3) pour le positionnement de la bande de transport (12) ou de l'emplacement d'impact (16), et en ce
**qu'**au moins l'angle de pivotement de la bande de transport (12) est commandé ou régulé de telle sorte que, lors d'une modification de position de la fraiseuse (1a, 1b) dans le système de coordonnées, le point de référence de la bande de transport (12) est maintenu constamment sur la trajectoire (25) prédéfinie.

**13.** Procédé selon la revendication 12, **caractérisé en ce que** la position et l'orientation actuelles du châssis de machine (2) dans le système de coordonnées sont détectées de façon continue, et l'angle de pivotement à régler est déterminé en fonction de l'emplacement de la trajectoire (25) fixe relativement au châssis de machine (2) ou au point de référence de la bande de transport (12).

**14.** Procédé selon la revendication 12 ou 13, **caractérisé en ce que**, lors d'une modification souhaitée du tracé de la trajectoire (25), une autre trajectoire (25) est entrée dans le système de coordonnées, ou l'orientation de la trajectoire (25) dans le système de coordonnées est modifiée autour d'un axe de rotation (19) virtuel préréglé placé à angle droit par rapport à la surface de sol (6), de préférence sur ou dans le prolongement de la bande de transport (12).

**15.** Procédé selon l'une des revendications 12 à 14, **caractérisé en ce que**, pour le calcul de la position et de l'orientation actuelles du châssis de machine (2) dans le système de coordonnées, le braquage de la direction et le trajet parcouru, ou le braquage de la direction et la vitesse de conduite instantanée sont détectés de façon continue, ou la position et l'orientation du châssis de machine (2) relativement au système de coordonnées sont détectées de façon continue à l'aide d'un dispositif de détermination de position GNSS.

Fig.1

**Fig.2**

**Fig.3**

**Fig.4**

**Fig.5a**

**Fig.5b**

**Fig.5c**

**Fig.6**

**Fig.7**

**IN DER BESCHREIBUNG AUFGEFÜHRTE DOKUMENTE**

**In der Beschreibung aufgeführte Patentdokumente**

- EP 2700748 A